# EUROPÄISCHE PATENTSCHRIFT

(11) **EP 0 823 718 B1**
(45) Veröffentlichungstag und Bekanntmachung des Hinweises auf die Patenterteilung: **06.12.2006**
(21) Anmeldenummer: 97202076.2
(22) Anmeldetag: 04.07.1997
(51) Int. Cl.: H01G 4/12, H01G 7/06

(54) **Bauteil mit einem Kondensator**
Device with capacitor
Dispositif avec condensateur

(30) Priorität: 31.07.1996 DE 19630883
(43) Veröffentlichungstag der Anmeldung: 11.02.1998
(73) Patentinhaber: Philips Intellectual Property & Standards GmbH, 20099 Hamburg (DE); Koninklijke Philips Electronics N.V., 5621 BA Eindhoven (NL)
(72) Erfinder: Klee, Mareike, Dr., Röntgenstrasse 24, 22335 Hamburg (DE); Brand, Wolfgang, Röntgenstrasse 24, 22335 Hamburg (DE); Hermann, Wilhelm, Dr., Röntgenstrasse 24, 22335 Hamburg (DE); Ulenaers, Matieu J.E., Röntgenstrasse 24, 22335 Hamburg (DE); Spierings, Gijsbertus A.C.M., Röntgenstrasse 24, 22335 Hamburg (DE); Haren, Hendrikus J.J.M. van, Ing., Röntgenstrasse 24, 22335 Hamburg (DE)
(74) Vertreter: Volmer, Georg

(56) Entgegenhaltungen:
- DE-A- 3 414 808

## Beschreibung

Die Erfindung betrifft ein Bauteil mit einem Kondensator, insbesondere als integriertes oder diskretes Bauteil, mit wenigstens einer Substratschicht aus Glas bzw. Al₂O₃, wenigstens einer Antireaktionsschicht bzw. Planarisierungsschicht, wenigstens zwei Elektrodenschichten und wenigstens einer Dielektrikumschicht sowie einen solchen Kondensator.

Des weiteren betrifft die Erfindung jeweils ein Verfahren zur Herstellung eines gattungsgemäßen Bauteiles mit einem Kondensator mit einem Glassubstrat und einer Antireaktionsschicht oder mit einem Al₂O₃-Substrat und einer Planarisierungsschicht.

Keramische Vielschichtkondensatoren werden üblicherweise auf pulvertechnologischem Wege hergestellt. Dazu werden Pulver mit Mischoxidverfahren bzw. mit naßchemischen Verfahren wie z.B. Fällung aus wäßrigen Lösungen hergestellt. Die Pulver gewünschter Zusammensetzung werden mit einem Binder versehen und z.B. zu Folien verarbeitet. Die Folien werden mit Elektrodenpasten bedruckt und anschließend übereinander gestapelt. Der Binder wird bei niedrigen Temperaturen ausgebrannt und die Kondensatoren werden bei Temperaturen von ca. 1250 - 1300°C, abhängig vom Materialsystem und der Zusammensetzung, zu einem dichten Produkt gesintert. Die mit Verfahren nach dem Stand der Technik hergestellten keramischen Kondensatoren weisen Dielektrika mit Dicken von ca. 10 - 15 µm auf. Mit Weiterentwicklung der Pulvertechnik können auf diese Weise Kondensatoren mit dielektrischen Dicken von ca. 3 - 5 µm erzeugt werden.

Bedingt durch die eingesetzten Folien- und Siebdrucktechnologien sowie die Stapelung der Folien mit bis zu 70 - 100 Lagen ist eine Miniaturisierung der äußeren Abmessungen technologisch sehr aufwendig für Kondensatorabmessungen 0402 und 0201, was 1 · 0,5 mm² und 0,5 · 0,25 mm² entspricht. Nach dem Stand der Technik sind Kriechwege in den Kondensatoren von ca. 150 - 250 µm typisch. Ein Kondensator mit den lateralen Abmessungen 0402 oder 0201 besitzt daher nur noch einen kleinen Teil aktiver Kondensatorfläche.

Aus DE 34 14 808 A1 "Verfahren zur Herstellung eines preiswerten Dünnfilmkondensators und danach hergestellter Kondensators" ist bekannt, daß auf ein Substrat, vorzugsweise eine Glasplatte, eine Schicht aus einer mit Phosphor angereicherten Siliziumdioxidgrundierung aufgebracht wird, die ca. 3 % Phosphor enthält. Darauf wird dann eine zu strukturierende Schicht leitenden Materials, vorzugsweise aus Aluminium oder Nickel, zur Definierung von Elektroden aufgebracht. Auf das behandelte Substrat wird dann eine Schicht Siliziumdioxid mit einer Dielektrizitätskonstanten K=3,97 und einer Dicke von 1,155 µm aufgebracht. Im Dokument DE 34 14 808 A1 werden folglich Dünnschichtkondensatoren beschrieben, die eine sehr geringe Flächenkapazität aufweisen. Als Substrat wird Glas eingesetzt und als Elektrodenmaterial dient Aluminium. Unter diesen Bedingungen kann nur eine einfache oxidische Schicht wie das angegebene SiO₂ als Dielektrikum benutzt werden. Diese Schichten haben eine sehr niedrige Dielektrizitätskonstante K und liefern damit auch sehr niedrige Flächenkapazitäten. Mit diesen Dielektrika können nur Kondensatoren mit 100 - 500 pF erzeugt werden. Um hohe Kapazitäten zu erreichen, muß ein Dielektrikum mit K > 50 in Form dünner Schichten auf einem Substrat abgeschieden werden.

Aus US 4,759,823 ist ein noch Verfahren zum Ätzen von dünnen Schichten von PLZT-Zusammensetzungen auf Substraten bekannt. Mittels des angegebenen Verfahrens kann ein mit einem dünnen Film beschichtetes Substrat hergestellt werden, welches das gewünschte Muster des dünnen Films zur Verwendung in einem integrierten Schaltkreis aufweist. Es werden dielektrische Schichten aus ferroelektrischem Material mit einer Platin-Elektrode auf einem Halbleiter-Substrat offenbart.

Die Aufgabe der Erfindung ist es daher, kostengünstige, SMD-fähige Kondensatoren mit hoher Flächenkapazität, geringer Dicke und geringer Toleranz herzustellen.

Die Aufgabe wird erfindungsgemäß durch einen Kondensator oder Bauteil mit einem Kondensator mit den Merkmalen nach Anspruch 1 gelöst. Als Glassubstrat können dabei neben Quarzglas (SiO₂) insbesondere aus Kostengründen auch Silikatgläser verwendet werden. Um hohe Kapazitäten in kleinen Abmessungen zu erreichen, müssen dielektrische Materialien eingesetzt werden, die Dielektrizitätskonstanten K> 10 haben, aus denen für ausreichende Kapazitäten mit Dünnschichtprozessen dünne, dielektrische Schichten hergestellt werden. Um diese Materialien auf einem kostengünstigen Glassubstrat verwenden zu können, muß eine Antireaktionsschicht vorgesehen werden, die eine Reaktion des Dielektrikums mit dem Glassubstrat verhindert. Weiterhin wird durch diese Antireaktionsschicht auch das Problem einer Rißbildung durch unterschiedliche thermische Ausdehnungskoeffizienten von Substrat und Dielektrikumschicht vermieden. Bei einer Antireaktionsschicht aus einem der oben angegebenen Stoffe oder einer Kombination aus mehreren Stoffen auf dem Glassubstrat kann darauf eine dielektrische Schicht aufgebracht werden, mit der eine ausreichende Kapazität erreicht wird. Als Verfahren eine Antireaktionsschicht abzuscheiden, ist auch das Aufbringen einer Schichtzusammensetzung geeignet, wie beispielsweise einer Ti/Pt - Schicht, gefolgt von einer Strukturierung des Pt mittels reaktivem Ionenätzen und anschließender Oxidation des Ti in Sauerstoffatmosphäre zu TiO₂.

In einer bevorzugten Ausführungsform der Erfindung ist als Material für die Elektrodenschichten jeweils wenigstens ein Element aus einer Gruppe, bestehend aus Ti/Pt, Ta/Pt, Ti/Pd/Pt, Ir, IrOx, IrO₂/Ir, ZrO₂/Pt, Ti/Cu, Ti/Ni, Ti/NiAl, Ti/(Ni, Al, Cr), Ti/(Ni, Al, Fe), Ti/(Ni, Fe, Cr), Ti/(Ni, Al, Cr, Fe), Ti/(Ni, Fe, Cr, Si), Ti/(Co, Ni, Fe, Cr), PtₓAl₁₋ₓ/Pt, Pt/IrO₂, TiO₂/Pt, leitenden Oxiden, Hybriden aus wenigstens einem leitenden Oxid und einem Edelmetall und Hybriden aus wenigstens einem Edelmetall und einem Nichtedelmetall, vorgesehen. Als Material für die Elektroden werden Edelmetall- oder Nichtedelmetallschichten eingesetzt, die beispielsweise mittels lithographischer Prozesse verbunden mit Naß- oder Trockenätzschritten zu Elektroden strukturiert werden. Als leitende Oxide können dabei beispielsweise die Verbindungen RuOₓ, SrRuO₃ oder andere verwendet werden. Für hybride Kombinationen aus leitenden Oxiden und Edelmetallen kommen zum Beispiel Kombinationen wie RuOₓ/Pt zur Anwendung. Als Hybridelektroden aus Edelmetall und Nichtedelmetall eignen sich insbesondere die Kombinationen Ti/Cu/Pt, Ti/Ni/Pt und Ti/(Ni, Cr, Al, Fe)/Pt sowie weitere ähnliche Verbindungen.

Für die Dielektrikumschicht ist eine Schicht aus ferroelektrischem Material mit einer Dicke von 10 nm bis 2 µm vorgesehen. Da aufgrund der Antireaktionsschichten dünne, ferroelektrische Dielektrika mit geringem Verlustfaktor auf kostengünstigem Substrat aufgebracht werden können, ist die Herstellung eines Kondensators mit großer Volumenkapazität in Dünnschichttechnik möglich, der SMD-fähig und mit großer Präzision fertigbar ist. Für Dünnschichten von 10 nm bis 2 µm werden vorzugsweise folgende dielektrische Materialien verwendet:
PbZrₓTi₁₋ₓO₃ mit x=0-1, mit oder ohne Bleiüberschuß
Dotiertes PbZrₓTi₁₋ₓO₃, z. B. mit Nb dotiert
Pb_{1-αy}La_{y}ZrₓTi₁₋ₓO₃ mit x=0-1, y=0-0,20 und α=1,3-1,5, mit oder ohne Bleiüberschuß
Pb_{1-αy}La_{y}TiO₃ mit y=0-0,28 und α=1,3-1,5, mit oder ohne Bleiüberschuß
(Pb, Ca)TiO₃
BaTiO₃, mit oder ohne Dotierungen
BaTiO₃ mit Ce-Dotierung
BaTiO₃ mit Nb- und/oder Co-Dotierung
BaZrₓTi₁₋ₓO₃ mit x=0-1
Ba₁₋ₓSrₓTiO₃ mit x=0-1
SrTiO₃ mit Dotierungen von z. B. La, Nb, Fe, Mn
SrZrₓTi₁₋ₓO₃ mit x=0-1 mit oder ohne Mn-Dotierung
CaOₓZnO_{y}(Nb₂O₅)_{z} mit x=0,01-0,05; y=0,43-0,55; z=0,44-0,52
(BaTiO₃)_{0,18-0,27}+(Nd₂O₃)_{0,316-0,355}+(TiO₂)_{0,276-0,355}+(Bi₂O₃)_{0,025-0,081} +ZnO
MgO-TiO₂-CaO-Al₂O₃-SiO₂ mit Dotierung von Nb, Y, La, Pr, Ni
Al₂O₃
Ba₂Ti₉O₂₀
Nb₂O₅
TiO₂
CaTiO₃
CaTiO₃ + CaTiSiO₅
(Sr, Ca)(Ti, Zr)O₃
(Sr, Ca, M)(Ti, Zr)O₃ M=Mg oder Zn
(Sr, Ca, Mg, Zn)(Ti, Zr, Si)O₃
(Sr, Ca, Cu, Mn, Pb)TiO₃ + Bi₂O₃
BaO-SrO-CaO-Nd₂O₃-Gd₂O₃-Nb₂O₅-TiO₂
(Bi₂O₃)ₓ(Nb₂O₅)₁₋ₓ mit Zugaben von SiO₂, MnO₂, PbO
BaTiO₃ mit Nb₂O₅, CoO, MnO₂, CeO₂, ZnO Dotierungen
BaTiO₃ + CaZrO₃ mit Zugabe von MnO, MgO und Seltenerdoxiden
(Ba, Ca)TiO₃ + Nb₂O₅, Co₂O₃, MnO₂
Zr(Ti, Sn)O₄
BaO-PbO-Nd₂O₃-Pr₂O₃-Bi₂O₃-TiO₂
Ba(Zn, Ta)O₃
Ta₂O₅
CaZrO₃
(Ba, Nd)(Ti, Zr)O₃ + Ce-Dotierung
(Ba, Ca, Sr)(Ti, Zr)O₃ + Li₂O, SiO₂, B₂O₃
PbO-Nb₂O₃-ZrO₂-SnO₂-TiO₂
[Pb(Mg_{1/3}Nb_{2/3})O₃]ₓ-[PbTiO₃]₁₋ₓ mit x=0..1, mit und ohne Bleiüberschuß, mit und ohne Dotierung
(Pb, Ba, Sr)(Mg_{1/3}Nb_{2/3})ₓTi_{y}(Zn_{1/3}Nb_{2/3})_{1-x-y}O₃
i) Pb(Mg_{1/2}W_{1/2})O₃
ii) Pb(Fe_{1/2}Nb_{1/2}O₃
iii) Pb(Fe_{2/3}W_{1/3})O₃
iv) Pb(Ni_{1/3}Nb_{2/3})O₃
v) Pb(Zn_{1/3}Nb_{2/3})O₃
Kombinationen der Verbindungen i) - v) mit PbTiO₃ und Pb(Mg_{1/3}Nb_{2/3})O₃ Pb(Sc_{1/2}Ta_{1/2})O₃

Ebenfalls können auch Schichtstrukturen, die aus mehreren einzelnen Schichten der oben aufgeführten Verbindungen aufgebaut sind, wie beispielsweise eine titanreiche PZT-Schicht und darauf PLZT-Schichten, verwendet werden, wodurch sich insbesondere die elektrischen Eigenschaften der Schicht verbessern.

Die Aufgabe wird erfindungsgemäß ebenfalls durch einen Kondensator oder Bauteil mit einem Kondensator mit den Merkmalen nach Anspruch 2 und 3 gelöst. Ähnlich wie bei einem erfindungsgemäßen Kondensator mit einem Glassubstrat und einer Antireaktionsschicht werden dielektrische Materialien eingesetzt, die Dielektrizitätskonstanten K > 10 haben, um hohe Kapazitäten in kleinen Abmessungen zu erreichen. Um diese Materialien auf einem kostengünstigen Al₂O₃-Substrat verwenden zu können, muß eine Planarisierungsschicht vorgesehen werden, da neben einer Reaktion des Dielektrikums mit Al₂O₃ auch Kurzschlüsse der Kondensatoren aufgrund der hohen Oberflächenrauhigkeit verhindert werden müssen. Weiterhin wird auch eine Rißbildung der dielektrischen Schicht durch unterschiedliche thermische Ausdehnungskoeffizienten vermieden. Bei einer Planarisierungsschicht aus einem der oben angegebenen Stoffe oder einer Kombination aus mehreren Stoffen auf dem Al₂O₃-Substrat kann darauf eine dielektrische Schicht aufgebracht werden, mit der eine ausreichende Kapazität erreicht wird. Im Falle von sehr oberflächenrauhen Substraten, wie z.B. Al₂O₃ - Substraten mit Dickschicht- qualität, werden mehrere Mikrometer dicke Planarisierungsschichten aufgebracht. Diese Planarisierungsschicht kann z.B. eine Blei-Silikatglasschicht oder auch zur Erhöhung der Temperaturstabilität eine mit TiO₂, ZrO₂ oder auch PbTiO₃ oder einem der anderen oben angegebenen Zusätze angereicherte Glasschicht sein. Als Verfahren zur Abscheidung einiger Mikrometer dicker Schichten können hier z.B. Dickschichtprozesse, wie z.B. Siebdruckprozesse, eingesetzt werden.

In einer bevorzugten Ausführungsform des erfindungsgemäßen Kondensators mit Al₂O₃ - Substrat ist als Material für die Elektrodenschichten jeweils wenigstens ein Element aus einer Gruppe, bestehend aus Ti/Pt, Ta/Pt, Ti/Pd/Pt, Ir, IrOₓ, IrO₂/Ir, ZrO₂/Pt, Ti/Cu, Ti/Ni, Ti/NiAl, Ti/(Ni, Al, Cr), Ti/(Ni, Al, Fe), Ti/(Ni, Fe, Cr), Ti/(Ni, Al, Cr, Fe), Ti/(Ni, Fe, Cr, Si), Ti/(Co, Ni, Fe, Cr), PtₓAl₁₋ₓ/Pt, Pt/IrO₂, TiO₂/Pt, leitenden Oxiden, Hybriden aus wenigstens einem leitenden Oxid und einem Edelmetall und Hybriden aus wenigstens einem Edelmetall und einem Nichtedelmetall, vorgesehen. Als leitende Oxide können dabei beispielsweise die Verbindungen RuOₓ, SrRuO₃ oder andere verwendet werden. Für hybride Kombinationen aus leitenden Oxiden und Edelmetallen kommen zum Beispiel Kombinationen wie RuOₓ/Pt zur Anwendung. Als Hybridelektroden aus Edelmetall und Nichtedelmetall eignen sich insbesondere die Kombinationen Ti/Cu/Pt, Ti/Ni/Pt und Ti/(Ni, Cr, Al, Fe)/Pt sowie weitere ähnliche Verbindungen.

Für die Dielektrikumschicht ist eine Schicht aus ferroelektrischem Material mit einer Dicke von 10 nm bis 2 µm vorgesehen. Auch hier können mit Hilfe der Planarisierungsschichten dünne, ferroelektrische Dielektrika mit geringem Verlustfaktor auf kostengünstigem Substrat aufgebracht werden, die die Herstellung eines Kondensators mit großer Volumenkapazität in Dünnschichttechnik ermöglichen, der SMD-fähig und mit großer Präzision fertigbar ist. Als dielektrische Materialien werden vorzugsweise die oben für Schichtdicken von 10 nm - 2 µm auf einem Glassubstrat angegebenen Stoffe verwendet.

In einer anderen Weiterbildung des Kondensators in Dickschichttechnik ist dagegen als Material für die Elektrodenschichten jeweils wenigstens ein Metallpulver in Form einer Paste aus einer Gruppe, bestehend aus AgₓPt₁₋ₓ mit x=0..1, AgₓPd₁₋ₓ mit x=0..1, Ag, Cu, Ni und diese Metallpulver jeweils mit Zugabe geringer Mengen eines Haftglases, vorgesehen.

Neben der Ausführungsform in Dünnschichttechnik auf einem Al₂O₃ - Substrat kann es auch vorteilhaft sein, für die Dielektrikumschicht eine Schicht aus ferroelektrischem Material mit einer Dicke von 2 µm bis 20 µm vorzusehen. Bei letzterer Abwandlung handelt es sich nicht um eine Ausführungsform der Erfindung, sie ist jedoch für das Verständnis der Erfindung nützlich. Für Dickschichten von ca. 2 µm - 20 µm werden als dielektrische Materialien vorzugsweise Pasten verwendet, die die folgenden Bestandteile in Form von Pulver enthalten:
PbZrₓTi₁₋ₓO₃ mit x=0-1, mit und ohne Bleiüberschuß (z.B. PbWO₃)
Dotiertes PbZrₓTi₁₋ₓO₃ mit Flüssigphase
Pb_{1-αy}La_{y}ZrₓTi₁₋ₓO₃ mit x=o-1, y=0-0,20 und α=1,3-1,5
Pb_{1-αy}La_{y}TiO₃ mit y=0-0,28 und α=1,3-1,5
(Pb, Ca)TiO₃
BaTiO₃
BaTiO₃ mit Ce-Dotierung
BaTiO₃ mit Nb- und/oder Co-Dotierung
BaZrₓTi₁₋ₓO₃ mit x=0-1
Ba₁₋ₓSrₓTiO₃ mit x=0-1
SrTiO₃ mit Dotierungen von z. B. La, Nb, Fe, Mn
SrZrₓTi₁₋ₓO₃ mit x=0-1 mit oder ohne Mn-Dotierung
CaOₓZnO_{y}(Nb₂O₅)_{z} mit x=0,01-0,05; y=0,43-0,55; z=0,44-0,52
(BaTiO₃)_{0,18-0,27}+(Nd₂O₃)_{0,316-0,355}+(TiO₂)_{0,276-0,355}+(Bi₂O₃)_{0,025-0,081} +ZnO
CaTiO₃ + CaTiSiO₅
(Sr, Ca)(Ti, Zr)O₃
(Sr, Ca, M)(Ti, Zr)O₃ M=Mg oder Zn
(Sr, Ca, Mg, Zn)(Ti, Zr, Si)O₃
(Sr, Ca, Cu, Mn, Pb)TiO₃ + Bi₂O₃
BaO-SrO-CaO-Nd₂O₃-Gd₂O₃-Nb₂O₅-TiO₂
(Bi₂O₃)ₓ(Nb₂O₅)₁₋ₓ mit Zugaben von SiO₂, MnO₂, PbO
BaTiO₃ mit Nb₂O₅, CoO, MnO₂, CeO₂, ZnO Dotierungen
BaTiO₃ + CaZrO₃ mit Zugabe von MnO, MgO und Seltenerdoxiden
(Ba, Ca)TiO₃ + Nb₂O₅, CO₂O₃, MnO₂
MgO-TiO₂-CaO-Al₂O₃SiO₂ mit Dotierung von Nb, Y, La, Pr, Ni
Ba₂Ti₉O₂₀
Zr(Ti, Sn)O₄
BaO-PbO-Nd₂O₃-Pr₂O₃-Bi₂O₃-TiO₂
Ba(Zn, Ta)O₃
(Ba, Nd)(Ti, Zr)O₃ + Ce-Dotierungen
CaZrO₃
(Ba, Ca, Sr)(Ti, Zr)O₃ + Li₂O, SiO₂, B₂O₃
PbO-Nb₂O₃ZrO₂-SnO₂-TiO₂
[Pb(Mg_{1/3}Nb_{2/3})O₃]ₓ-[PbTiO₃]₁₋ₓ + Flüssigphase, mit x=0..1
(Pb, Ba, Sr)(Mg_{1/3}Nb_{2/3})ₓTi_{y}(Zn_{1/3}Nb_{2/3})_{1-x-y}O₃
i) Pb(Mg_{1/2}W_{1/2})O₃
ii) Pb(Fe_{1/2}Nb_{1/2})O₃
iii) Pb(Fe_{2/3}W_{1/3})O₃
iv) Pb(Ni_{1/3}Nb_{2/3})O₃
v) Pb(Zn_{1/3}Nb_{2/3})O₃
Kombinationen der Verbindungen i) - v) mit
PbTiO₃ und Pb(Mg_{1/3}Nb_{2/3})O₃+Flüssigphase
Pb(Sc_{1/2}Ta_{1/2})O₃
[Pb(Mg_{1/3}Nb_{2/3})O₃]ₓ-[PbTiO₃]₁₋ₓ mit PbWO₃ als Flüssigphase und mit x=0..1.

Weiterhin eignen sich insbesondere Pasten gut, die die vorstehend genannten Bestandteile in Form von Pulver enthalten und denen zur Erniedrigung der Prozeßtemperatur Gläser oder ein anorganischer Binder in Form eines Gels beigemischt wird.

Vorteilhafterweise ist bei den Ausführungsformen des Bauteiles wenigstens eine organische oder anorganische Schutzschicht vorgesehen. Als Materialien für die Schutzschicht gegen beispielsweise mechanische Beanspruchungen eignen sich insbesondere polymere Schutzschichten oder anorganische Schutzschichten oder Kombinationen aus polymeren und anorganischen Schutzschichten, wie z.B. SiO₂ + Polyimid. Dabei kann das Bauteil mit einem Kondensator auch so ausgeführt sein, daß auf die anorganische oder polymere Schutzschicht ein weiteres Substrat, beispielsweise ein Glassubstrat, aufgeklebt ist.

Weiterhin sind vorzugsweise wenigstens zwei Endkontakte vorgesehen. An den Endkontakten kann das Bauteil mit externen Bauelementen elektrisch gekoppelt werden. Diese Endkontakte können vorteilhafterweise je nach Anwendung unterschiedlich ausgeführt sein. Daher sind neben den konventionellen Endkontakten, bei welchen 5 Flächen kontaktiert werden, weitere Gestaltungsformen möglich und für bestimmte Applikationen oder Arten der Bauteilmontage geeigneter. Beispielsweise können verwendet werden:
a) SMD-Endkontakte mit weniger als 5 Kontaktflächen,
b) Endkontakte, bei denen 3 Flächen U-förmig kontaktiert werden,
c) Endkontakte, bei denen 2 Flächen L-förmig kontaktiert werden,
d) SMD-Endkontakte mit 5 oder weniger Kontaktflächen, bei denen sowohl die obere als auch die untere Elektrodenschicht von oben kontaktiert werden,

Da es sich bei der Herstellung dieser Produkte in der Regel um Massenprodukte handelt, die in Consumeranwendungen eingesetzt werden, müssen besonders kostengünstige Verfahren zum Einsatz kommen. Als sehr kostengünstiges Verfahren zur Abscheidung dünner, dielektrischer Schichten mit K > 10 wird beispielsweise ein naßchemisches Dünnschichtverfahren, wie z.B. das Sol-Gel Verfahren eingesetzt. Hiermit können z.B. PbZrₓTi₁₋ₓO₃ - Schichten in Form keramischer Schichten bei Temperaturen von ca. 400 - 700°C erzeugt werden. Die Prozeßtemperaturen liegen damit 500 - 600°C niedriger als die entsprechenden Temperaturen zur Herstellung dichter keramische PbZrₓTi₁₋ₓO₃ - Sinterkörper. Der Einsatz dieser Verfahren, wie z.B. naßchemischer Verfahren, gestattet die Abscheidung der Schichten bei niedrigen Temperaturen mit Dicken bis zu 10 nm. Die niedrigen Temperaturen sind notwendig, um die sehr dünnen Schichten auf kostengünstigen Substraten, wie z.B. Glassubstraten oder Al₂O₃ - Substraten, zu fertigen. Um sehr dünne Kondensatoren zu erzeugen, werden dünne Substratplatten mit Dicken von ca. 200 - 500 µm eingesetzt.

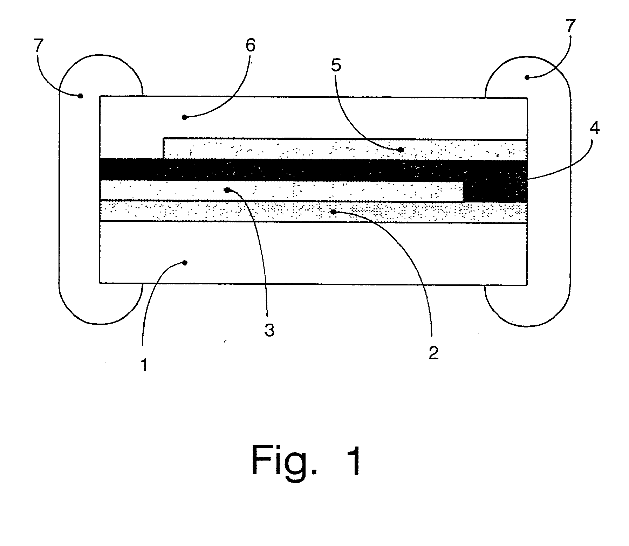

Im folgenden soll die Erfindung anhand einer Figur und von sechs Ausführungsbeispielen erläutert werden. Dabei zeigt
- Fig. 1:: den schematischen Aufbau des erfindungsgemäßen Bauteiles im Querschnitt.

In dem Bauteil in Figur 1 bezeichnet 1 eine Substratschicht, beispielsweise Glas oder Al₂O₃, 2 eine Antireaktions- bzw. Planarisierungsschicht, 3 eine erste Elektrode, 4 eine Dielektrikumschicht, 5 eine zweite Elektrode, 6 eine Schutzschicht und 7 zwei auf beiden Seiten angebrachten Endkontakte. Neben den konventionellen Endkontakten, bei denen fünf Flächen des Bauteiles kontaktiert werden, sind auch andere Ausführungsformen denkbar.

Im folgenden werden Ausführungsformen der Erfindung erläutert, die beispielhafte Realisierungsmöglichkeiten darstellen.

### Ausführungsbeispiel 1:

Auf ein Glassubstrat 1 (Corning 7059) wird durch ein Sputterverfahren eine dünne Ti-Schicht 2 aufgebracht und anschließend oxidiert. Im Anschluß daran wird eine Ti/Pt - Schicht 3 aufgesputtert. Zur Strukturierung wird diese Elektrodenschicht durch eine mechanische Maske gesputtert. Auf dieses Substrat wird eine PbZr_{0,35}Ti_{0,65}O₃ - Schicht 4 aufgebracht. Die Abscheidung der PbZr_{0,35}Ti_{0,65}O₃ - Schicht 4 erfolgt durch Einsatz einer Lösung, bei welcher Bleiacetat-tri-hydrat in 60g Ethylenglykolmonomethylether aufgelöst wurde. Zu dieser Lösung wurden 8,62g Titan-tetra-n-butylat und 7,51g Zirkon-tetra-n-butylat gegeben. Die Lösung wurde durch ein Celluloseacetatfilter mit einer Porenweite von 0,2 µm filtriert. Zur Abscheidung einer PZT - Schicht 4 wird ein Glassubstrat 1 mit strukturierter Pt - Elektrode 3 eingesetzt. Auf dieses Substrat werden ca. 1 ml der Pb-Ti-Zr-Lösung aufgebracht und damit mit einem Schleuderverfahren mit 2500 Umdrehungen pro Minute beschichtet. Die Schicht wird mit 100°C/sec auf 550°C unter Sauerstoffatmosphäre aufgeheizt und anschließend bei dieser Temperatur gesintert. Dieser Vorgang wird mehrmals wiederholt, um eine Schicht mit einer Schichtdicke von ca. 0,3-1 µm zu erzeugen. Auf diese PZT Schicht 4 wird durch eine mechanische Maske eine zweite Pt - Elektrode 5 aufgesputtert. Nach Abscheidung einer 0,5 µm dicken SiO₂-Schicht und einer organischen Schutzschicht 6 werden die Substrate in Streifen geteilt und anschließend mit Endkontakten 7 versehen.

### Ausführungsbeispiel 2:

Auf ein Glassubstrat 1 (Schott AF45) wird durch ein Sputterverfahren eine dünne Ti-Schicht 2 aufgebracht und thermisch oxidiert. Anschließend wird eine Ti/Pt Schicht 3 aufgesputtert. Zur Strukturierung wird diese Elektrode durch reaktives Ionenätzen behandelt. Auf dieses Substrat wird eine PbZr_{0,35}Ti_{0,65}O₃ Schicht 4 aufgebracht. Die Abscheidung einer PbZr_{0,35}Ti_{0,65}O₃ Schicht 4 erfolgt durch Einsatz einer Lösung, bei welcher Bleiacetat-tri-hydrat in 60 g Ethylenglykolmonomethylether aufgelöst wurde. Zu dieser Lösung wurden 8,62g Titan-tetra-n-butylat und 7,51 g Zirkon-tetra-n-butylat gegeben. Die Lösung wurde durch ein Celluloseacetatfilter mit einer Porenweite von 0,2 µm filtriert. Zur Abscheidung einer PZT Schicht 4 wird das Glassubstrat 1 mit strukturierter Pt Elektrode 3 eingesetzt. Auf dieses Substrat werden ca. 1 ml der Pb-Ti-Zr-Lösung aufgebracht und mit einem Schleuderverfahren mit 2500 Umdrehungen pro Minute beschichtet. Die Schicht wird mit 100 °C/sec auf 550 °C unter Sauerstoffatmosphäre aufgeheizt und anschließend bei dieser Temperatur gesintert. Dieser Vorgang wird mehrmals wiederholt, um eine Schicht von ca. 0,2-1 µm zu erzeugen. Auf diese PZT Schicht 4 wird eine Pt - Elektrode 5 aufgesputtert und durch reaktives Ionenätzen strukturiert. Die weitere Verarbeitung zu einem Kondensatorbauteil erfolgt entsprechend Ausführungsbeispiel 1.

### Ausführungsbeispiel 3:

Auf ein Glassubstrat 1 (entsprechend Ausführungsbeispiel 1, 2 oder 3) wird durch ein Sputterverfahren eine dünne Ti/Pt Schicht 2 und 3 mit 10 nm Ti und 140 nm Pt aufgesputtert. Zur Strukturierung wird die kontinuierliche Pt Elektrode 3 durch einen reaktiven Ionenätzprozeß strukturiert. Anschließend wird eine aus TiO₂ bestehende Antireaktionsschicht 2 auf dem Substrat 1 erzeugt, indem die kontinuierliche Ti Schicht durch eine thermische Behandlung bei 450 °C im Sauerstoffstrom in eine dichte TiO₂ Schicht 2 umgewandelt wird. Auf dieses Substrat wird eine PbZr_{0,35}Ti_{0,65}O₃ Schicht und eine PbZr_{0,53}Ti_{0,47}O₃ Schicht 4, welche mit La dotiert ist, aufgebracht. Die Herstellung einer Pb-La-Ti-Zr-Lösung erfolgt in ähnlicher Weise wie die Herstellung der in Ausführungsbeispiel 1, 2, 3 beschriebenen Lösungen. Zur Abscheidung der Pb-Ti-Zr und Pb-La-Zr-Ti Schicht 4 wird das, wie oben mit einer Antireaktionsschicht 2 versehene Glassubstrat 1, eingesetzt. Die Abscheidung der Schichtstrukturen erfolgt wie in Ausführungsbeispiel 3. Auf diese PZT Schicht 4 wird durch ein Sputterverfahren eine Pt Schicht aufgebracht. Durch reaktives Ionenätzen wird diese Oberelektrode 5 strukturiert. Anschließend wird eine Schutzschicht 6 bestehend aus 0,5 µm SiO₂ durch chemische Abscheidung aufgebracht und strukturiert. Auf die SiO₂ Schicht wird eine 10 µm dicke Polymerschicht in Form von Polyimid aufgebracht und strukturiert. Das Glassubstrat wird in Streifen getrennt. NiCr Endkontakte 7 werden aufgesputtert und NiPbSn Endkontakte 7 werden in einem galvanischen Bad aufgewachsen.

### Ausführungsbeispiel 4:

Auf ein Glassubstrat 1 (Schott AF45) werden durch ein Druckverfahren auf der Unterseite des Substrats 1 Endkontakte aufgedruckt. Anschließend wird durch ein Schleuderverfahren eine dünne ZrO₂ Schicht als Antireaktionsschicht 2 auf das Glassubstrat aufgebracht. Auf diese Antireaktionsschicht 2 wird mittels Lift-off-Verfahren eine dünne Ti/Pt Schicht 2 und 3 mit 10 nm Ti und 140 nm Pt strukturiert aufgebracht. Auf dieses Substrat wird eine Schichtstruktur 4 aus einer PbZr_{0,35}Ti_{0,65}O₃ Schicht und einer PbZr_{0,53}Ti_{0,47}O₃ Schicht, welche mit La dotiert ist, aufgebracht. Die Beschichtung erfolgt wie in Ausführungsbeispiel 4 beschrieben. Zur Herstellung des Kondensators wird auf die PLZT Schicht 4 eine Pt Schicht 5 aufgebracht. Durch ein Lift-Off-Verfahren wird diese Oberelektrode 5 strukturiert. Anschließend wird eine Schutzschicht 6 bestehend aus 0,5 µm Si₃N₄ mittels PECVD abgeschieden. Nach der Strukturierung der Si₃N₄ Schicht wird eine etwa 10 µm dicke Polyimidschicht aufgebracht und strukturiert. Nach einer Separation in Streifen werden NiCr Endkontakte 7 aufgesputtert. Nach der vollständigen Separation in Einzelprodukte werden NiPbSn Endkontakte 7 in einem galvanischen Bad aufgewachsen.

### Ausführungsbeispiel 5:

Auf ein Al₂O₃-Substrat 1 (Dickschichtqualität) werden durch ein Druckverfahren auf der Unterseite des Substrats Endkontakte aufgedruckt. Anschließend wird durch einen weiteren Druckprozeß eine Bleisilikatschicht als Planarisierungsschicht 2 aufgedruckt. Dazu wird ein Bleisilikatpulver in Isopropanol dispergiert. Grobe Partikel werden entfernt durch Sedimenation. Die verbleibende Slurry wird auf das Al₂O₃ Substrat 1 mittels eines Doktorbladeverfahrens aufgebracht. Das Substrat wird getrocknet und anschließend bei 900 °C gesintert. Auf dieses planarisierte Substrat 1 und 2 wird mittels Lift-off-Verfahren eine dünne Ti/Pt Schicht 2 und 3 mit 10 nm Ti und 140 nm Pt aufgesputtert und strukturiert. Auf dieses Substrat wird eine PbZr_{0,53}Ti_{0,47}O₃ Schicht 4, welche mit La dotiert ist, aufgebracht. Die Beschichtung erfolgt wie in Ausführungsbeispiel 4 beschrieben. Zur Herstellung des Kondensators wird auf die PLZT Schicht 4 eine Pt Schicht 5 aufgebracht. Durch einen Druckprozeß und ein Lift-off-Verfahren wird diese Oberelektrode 5 strukturiert. Anschließend wird eine niedrig sinternde Glasschicht als Schutzschicht 6 aufgedruckt. Nach einer Separation in Streifen werden NiCr Endkontakte 7 aufgesputtert. Nach der vollständigen Separation in Einzelprodukte werden NiPbSn Endkontakte 7 in einem galvanischen Bad aufgewachsen.

## Patentansprüche

1. Kondensator oder Bauteil mit einem Kondensator mit
- wenigstens einer Substratschicht (1)
- wenigstens zwei Electrodenschichten (3,5)
- wenigstens einer Dielektrikumsschicht (4) aus ferroelektrischem Material mit einer Dicke von 10 nm bis 2 µm,
**dadurch gekennzeichnet,**
**daß**
- die Substratschicht (1) aus Glas ist;
- eine Antireaktionsschicht (2) aus wenigstens einem Element aus einer Gruppe, bestehend aus TiO₂, ZrO₂, HfO₂, SrTiO₃, CaTiO₃, BaTiO₃, BaZrₓTi₁₋ₓO₃ mit x=0...1, Ta₂O₅, Nb₂O₅, MgO, BeO, Al₂O₃, MgAl₂O₄, ZrTiO₄, BaF₂, TiB₂, MgF₂, Y₂O₃, Sc₂O₃, La₂O₃ und Ln₂O₃, wobei Ln Lanthanide, wie z.B. Pr sind, vorgesehen ist.

2. Kondensator oder Bauteil mit einem Kondensator mit
- wenigstens einer Substratschicht (1)
- wenigstens zwei Electrodenschichten (3,5)
- wenigstens einer Dielektrikumsschicht (4) aus ferroelektrischem Material mit einer Dicke von 10 nm bis 2 µm,
**dadurch gekennzeichnet,**
**daß**
- die Substratschicht (1) aus Al₂O₃ ist und
- eine Planarisierungsschicht aus einem nicht kristallisierendem Bleisilikatglas vorgesehen ist.

3. Kondensator oder Bauteil mit einem Kondensator mit
- wenigstens einer Substratschicht (1)
- wenigstens zwei Electrodenschichten (3,5)
- wenigstens einer Dielektrikumsschicht (4) aus ferroelektrischem Material mit einer Dicke von 10 nm bis 2 µm,
**dadurch gekennzeichnet,**
**daß**
- die Substratschicht (1) aus Al₂O₃ ist,
- eine Planarisierungsschicht aus einem nicht kristallisierendem Glas vorgesehen ist, mit Zusatz von wenigstens einem Element aus einer Gruppe, bestehend aus TiO₂, ZrO₂, HfO₂, SrTiO₃, CaTiO₃, BaTiO₃, BaZrₓTi₁₋ₓO₃ mit x=0...1, Ta₂O₅, Nb₂O₅, MgO, BeO, Al₂O₃, MgAl₂O₄, ZrTiO₄, BaF₂, TiB₂, MgF₂,Y₂O₃, Sc₂O₃, La₂O₃ und Ln₂O₃, wobei Ln Lanthanide, wie z.B. Pr sind.

4. Bauteil nach Anspruch 1, 2 oder 3,
**dadurch gekennzeichnet,**
**daß** als Material für die Elektrodenschichten (3,5) jeweils wenigstens ein Element aus einer Gruppe bestehend aus Ti/Pt, Ta/Pt, Ti/Pd/Pt, Ir, IrOₓ, IrO₂/Ir, ZrO₂/Pt, Ti/Cu, Ti/Ni, Ti/NiAl, Ti/(Ni, Al, Cr), Ti/(Ni, Al, Fe), Ti/(Ni, Fe, Cr), Ti/(Ni, Al, Cr, Fe), Ti/(Ni, Fe, Cr,Si), Ti/(Co, Ni, Fe, Cr), PtₓAl₁₋ₓ/Pt, Pt/IrO₂, leitenden Oxiden, Hybriden aus wenigstens einem leitenden Oxiden und einem Edelmetall und Hybriden aus wenigstens einem Edelmetall und einem Nichtedelmetall, vorgesehen ist.

5. Bauteil nach Anspruch 1,
**dadurch gekennzeichnet,**
**daß** das ferroelektrische Material gewählt worden ist aus der Gruppe von:
PbZrₓTi₁₋ₓO₃, mit gegebenenfalls Bleiüberschuß;
Dotiertes PbZrₓTi₁₋ₓO₃, z.B. mit Nb dotiert;
Pb_{1-αy}La_{y}ZrₓTi₁₋ₓO₃ mit x=0-1, y= 0-0,020 und α=1,3=1,5 mit gegebenenfalls Bleiüberschuß;
(Pb,Ca)TiO₃;
(Bi₂O₃)ₓ(Nb₂O₅)₁₋ₓ mit Zugaben von SiO₂, MnO₂, PbO;
BaO-PbO-Nd₂O₃-Pr₂O₃-Bi₂O₃-TiO₂;
PbO-Nb₂O₃-ZrO₂-SnO₂-TiO₂;
[Pb(Mg_{1/3}Nb_{2/3})O₃]ₓ-[PbTiO₃]₁₋ₓ mit x=0...1 und gegebenenfalls Bleiüberschuß und/oder Dotierung;
i) Pb(Mg_{1/2}W_{1/2})O₃
ii) Pb(Fe_{1/2}Nb_{1/2})O₃
iii) Pb(Fe_{2/3}W_{1/3})O₃
iv) Pb(Ni_{1/3}Nb_{2/3})O₃
v) Pb(Zn_{1/3}Nb_{2/3})O₃
Kombinationen der Verbindungen i) - v) mit PbTiO₃ und Pb(Mg_{1/3}Nb_{2/3})O₃ Pb(Sc_{1/2}Ta_{1/2})O₃.

6. Bauteil nach Anspruch 1,
**dadurch gekennzeichnet,**
**daß**
- als Antireaktionsschicht eine Schicht aus TiO₂ oder ZrO₂ vorgesehen ist, und
- als Dielektrikumsschicht mindestens eine Schicht aus PbZrₓTi₁₋ₓO₃, mit x=0..1 vorgesehen ist.

7. Bauteil nach Anspruch 1,
**dadurch gekennzeichnet,**
**daß** als die Substratschicht aus Glas (1) ein Silikatglas verwendet wird.

## Claims

1. A capacitor or a component comprising a capacitor, including
- at least one substrate layer (1),
- at least two electrode layers (3, 5),
- at least one dielectric layer (4) of ferroelectric material having a thickness in the range of 10 nm to 2 µm,
**characterized in that**
- the substrate layer (1) is made of glass;
- an anti-reaction layer (2) is provided comprised of at least one element of a group composed of TiO₂, ZrO₂, HfO₂, SrTiO₃, CaTiO₃, BaTiO₃, BaZrₓTi₁₋ₓO₃, wherein x=0..1, Ta₂O₅, Nb₂O₅, MgO, BeO, Al₂O₃, MgAl₂O₄, ZrTiO₄, BaF₂, TiB₂,MgF₂, Y₂O₃, Sc₂O₃, La₂O₃ and Ln₂O₃, Ln being lanthanides, such as Pr.

2. A capacitor or a component comprising a capacitor, including
- at least one substrate layer (1),
- at least two electrode layers (3, 5),
- at least one dielectric layer (4) of ferroelectric material having a thickness in the range of 10 nm to 2 µm,
**characterized in that**
- the substrate layer (1) is made of Al₂O₃, and
- a leveling layer of a non-crystallizing lead-silicate glass is provided.

3. A capacitor or a component comprising a capacitor, including
- at least one substrate layer (1),
- at least two electrode layers (3, 5),
- at least one dielectric layer (4) of ferroelectric material having a thickness in the range of 10 nm to 2 µm,
**characterized in that**
- the substrate layer (1) is made of Al₂O₃,
- a leveling layer of a non-crystallizing glass is provided to which is added at least one element of a group composed of TiO₂, ZrO₂, HfO₂, SrTiO₃, CaTiO₃, BaTiO₃, BaZrₓTi_{1- x}O₃, wherein x=0..1, Ta₂O₅, Nb₂O₅, MgO, BeO, Al₂O₃, MgAl₂O₄, ZrTiO₄, BaF₂, TiB₂, MgF₂, Y₂O₃, Sc₂O₃, La₂O₃ and Ln₂O₃, Ln being lanthanides, such as Pr.

4. A component as claimed in Claim 1, 2 or 3, **characterized in that** the material used for the electrode layers (3, 5) is at least one element of a group composed of Ti/Pt, Ta/Pt, Ti/Pd/Pt, Ir, IrOₓ, IrO₂/Ir, ZrO₂/Pt, Ti/Cu, Ti/Ni, Ti/NiAl, Ti/(Ni, Al, Cr), Ti/(Ni, Al, Fe), Ti/(Ni, Fe, Cr), Ti/(Ni, Al, Cr, Fe), Ti/(Ni, Fe, Cr, Si), Ti/(Co, Ni, Fe, Cr), PtₓAl₁₋ₓ/Pt, Pt/IrO₂, TiO₂/Pt, conductive oxides, hybrids of at least one conductive oxide and one noble metal, and hybrids of at least one noble metal and one base metal.

5. A component as claimed in Claim 1, **characterized in that** the ferroelectric material is selected from the group composed of:
PbZrₓTi₁₋ₓO₃, with or without an excess of lead;
Doped PbZrₓTi₁₋ₓO₃, for example doped with Nb;
Pb_{1-αy}La_{y}ZrₓTi₁₋ₓO₃, wherein x=0-1, y=0-0.020 and α=1.3-1.5, with or without an excess of lead;
(Pb, Ca)TiO₃;
(Bi₂O₃)ₓ(Nb₂O₅)₁₋ₓ with additives of SiO₂, MnO₂, PbO;
BaO-PbO-Nd₂O₃-Pr₂O₃-Bi₂O₃-TiO₂;
PbO-Nb₂O₃-ZrO₂-SnO₂-TiO₂
[Pb(Mg_{1/3}Nb_{2/3})O₃]ₓ-[PbTiO₃]₁₋ₓ, wherein x=0..1, with or without an excess of lead and/or doping;
i) Pb(Mg_{1/2}W_{1/2})O₃
ii) Pb(Fe_{1/2}Nb_{1/2})O₃
iii) Pb(Fe_{2/3}W_{1/3})O₃
iv) Pb(Ni_{1/3}Nb_{2/3})O₃
v) Pb(Zn_{1/3}Nb_{2/3})O₃
combinations of the compounds i) - v) with
PbTiO₃ and Pb(Mg_{1/3}Nb_{2/3})O₃;
Pb(Sc_{1/2}Ta_{1/2})O₃

6. A component as claimed in Claim 1, **characterized in that**
- for the anti-reaction layer use is made of a layer of TiO₂ or Zr02 , and
- for the dielectric layer use is made of at least one layer of PbZrₓTi₁₋ₓO₃, wherein x=0..1.

7. A component as claimed in Claim 1, **characterized in that** for the substrate layer of glass (1) use is made of a silicate glass.

## Revendications

1. Condensateur ou composant muni d'un condensateur avec
- au moins une couche de substrat (1)
- au moins deux couches d'électrode (3,5)
- au moins une couche de diélectrique (4) en matériau ferroélectrique d'une épaisseur de 10 nm à 2 µm,
**caractérisé en ce que**
- la couche de substrat (1) est en verre;
- une couche anti-réaction (2) constituée d'au moins un élément d'un groupe composé de TiO₂, ZrO₂, HfO₂, SrTiO₃, CaTiO₃, BaTiO₃, BaZrₓTi₁₋ₓO₃, avec x=0...1, Ta₂O₅, Nb₂O₅, MgO, BeO, Al₂O₃, MgAl₂O₄, ZrTiO₄, BaF₂, TiB₂,MgF₂, Y₂O₃, Sc₂O₃, La₂O₃ et Ln₂O₃, où Ln représente les lanthanides, comme, par exemple, le Pr, est prévue.

2. Condensateur ou composant muni d'un condensateur avec
- au moins une couche de substrat (1)
- au moins deux couches d'électrode (3,5)
- au moins une couche de diélectrique (4) en matériau ferroélectrique d'une épaisseur de 10nmà2 µm,
**caractérisé en ce que**
- la couche de substrat (1) est en Al₂O₃ et
- une couche de planarisation constituée d'un verre au silicate de plomb qui ne cristallise pas est prévue.

3. Condensateur ou composant muni d'un condensateur avec
- au moins une couche de substrat (1)
- au moins deux couches d'électrode (3,5)
- au moins une couche de diélectrique (4) en matériau ferroélectrique d'une épaisseur de 10 nm à 2 µm,
**caractérisé en ce que**
- la couche de substrat (1) est en Al₂O₃,
- une couche de planarisation constituée d'un verre qui ne cristallise pas est prévue, avec addition d'au moins un élément d'un groupe composé de TiO₂, ZrO₂, HfO₂, SrTiO₃, CaTiO₃, BaTiO₃, BaZrₓTi₁₋ₓO₃, avec x=0...1, Ta₂O₅, Nb₂O₅, MgO, BeO, Al₂O₃, MgAl₂O₄, ZrTiO₄, BaF₂, TiB₂,MgF₂, Y₂O₃, Sc₂O₃, La₂O₃ et Ln₂O₃, où Ln représente les lanthanides, comme, par exemple, le Pr.

4. Composant selon la revendication 1, 2 ou 3,
**caractérisé en ce que**
comme matériau pour les couches d'électrode (3,5), est prévu chaque fois au moins un élément d'un groupe composé de Ti/Pt, Ta/Pt, Ti/Pd/Pt, Ir, IrOₓ, IrO₂/Ir, ZrO₂/Pt, Ti/Cu, Ti/Ni, Ti/NiAl, Ti/(Ni, Al, Cr), Ti/(Ni, Al, Fe), Ti/(Ni, Fe, Cr), Ti/(Ni, Al, Cr, Fe), Ti/(Ni, Fe, Cr, Si), Ti/(Co, Ni, Fe, Cr), PtₓAl₁₋ₓ/Pt, Pt/IrO₂, d'oxydes conducteurs, d'hybrides composés au moins d'un oxyde conducteur et d'un métal précieux, et d'hybrides composés au moins d'un métal précieux et d'un métal non précieux.

5. Composant selon la revendication 1,
**caractérisé en ce que**
le matériau ferroélectrique a été choisi dans le groupe de:
PbZrₓTi₁₋ₓO₃, avec, le cas échéant, excédent de plomb;
PbZrₓTi₁₋ₓO₃ dopé, par exemple, au Nb;
Pb_{1-αy}La_{y}ZrₓTi₁₋ₓO₃ avec x=0-1, y=0-0,020 et α=1,3-1,5 avec, le cas échéant, excédent de plomb;
(Pb, Ca)TiO₃;
(Bi₂O₃)ₓ(Nb₂O₅)₁₋ₓ avec additions de SiO₂, MnO₂, PbO;
BaO-PbO-Nd₂O₃-Pr₂O₃-Bi₂O₃-TiO₂;
PbO-Nb₂O₃-ZrO₂-SnO₂-TiO₂;
[Pb(Mg_{1/3}Nb_{2/3})O₃]ₓ-[PbTiO₃]₁₋ₓ avec x=0...1 et, le cas échéant, excédent de plomb et/ou dopage;
i) Pb(Mg_{1/2}W_{1/2})O₃
ii) Pb(Fe_{1/2}Nb_{1/2})O₃
iii) Pb(Fe_{2/3}W_{1/3})O₃
iv) Pb(Ni_{1/3}Nb_{2/3})O₃
v) Pb(Zn_{1/3}Nb_{2/3})O₃
combinaisons des composés i) - v) avec PbTiO₃ et Pb(Mg_{1/3}Nb_{2/3})O₃
Pb(Sc_{1/2}Ta_{1/2})O₃.

6. Composant selon la revendication 1,
**caractérisé en ce que**
- comme couche anti-réaction, une couche de TiO₂ ou de ZrO₂ est prévue, et
- comme couche de diélectrique, au moins une couche de PbZrₓTi₁₋ₓO₃, avec x=0.. 1, est prévue.

7. Composant selon la revendication 1,
**caractérisé en ce que**
comme couche de substrat en verre (1), un verre silicaté est utilisé.
